(19) Europäisches Patentamt / European Patent Office / Office européen des brevets

(11) **EP 2 282 181 A1**

(12) **EUROPÄISCHE PATENTANMELDUNG**

(43) Veröffentlichungstag:
**09.02.2011 Patentblatt 2011/06**

(51) Int Cl.:
***G01F 22/00*** *(2006.01)*   ***G01F 1/00*** *(2006.01)*

(21) Anmeldenummer: **10166970.3**

(22) Anmeldetag: **23.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **23.07.2009  DE 102009034318**

(71) Anmelder: **Block, Ralf**
**47495 Rheinberg (DE)**

(72) Erfinder: **Block, Ralf**
**47495 Rheinberg (DE)**

(74) Vertreter: **Vomberg, Friedhelm**
**Schulstrasse 8**
**42653 Solingen (DE)**

(54) **Verfahren und Vorrichtung zur Bestimmung des Betriebsgasvolumens**

(57)   Die Erfindung betrifft eine Verfahren und eine Vorrichtung zur Bestimmung von Gasmengen, insbesondere des in Biogasanlagen während eines Messintervalls entstehenden Betriebsgasvolumens $V_{BG, i}$, bei der die Anzahl $N_B$ von in einer Flüssigkeit aufsteigenden Gasblasen bestimmt wird, eine Kalibriermessung durchgeführt wird, bei der die funktionale Abhängigkeit zwischen dem Gasblasenvolumen $V_B$ und der Gasblasenfrequenz $F_B$ bestimmt wird und anschließend das Betriebsgasvolumen $V_{BG, i}$ mittels der gemessenen Anzahl $N_B$ von Gasblasen unter Berücksichtigung der funktionalen Abhängigkeit zwischen dem Gasblasenvolumen $V_B$ und der Gasblasenfrequenz $F_B$ ermittelt wird

EP 2 282 181 A1

**Beschreibung**

Die vorliegende Erfindung betrifft ein Verfahren und eine Vorrichtung zur Bestimmung von Gasmengen, insbesondere des in Biogasanlagen während eines Messintervalls entstandenen Betriebsgasvolumens $V_{BG, i}$.

Zur Ermittlung und Aufzeichnung von geringen Gasmengen, wie sie im Umfeld von z. B. Laborversuchen entstehen, kann das Gas als Volumenstrom in "Quanten" aufgeteilt und die Größe der Quanten bestimmt werden. Durch Zählung der Quanten erhält man das gewünschte Ergebnis. Mit einem solchen Verfahren kann insbesondere die Gasmenge ermittelt werden, die pro Zeiteinheit, also z. B. pro Stunde, Tag oder Woche in einem technischen Prozess entsteht.

Zur Herstellung von Biogas wird Biomasse in Biogasanlagen anaerob vergärt. Hierbei entsteht ein Gasgemisch, das im Wesentlichen aus Methan ($CH_4$) und Kohlenstoffdioxid ($CO_2$) besteht, worin allerdings auch geringe Anteile von Stickstoff ($N_2$), Schwefelwasserstoff ($H_2S$), Wasserstoff ($H_2$) und Ammoniak ($NH_3$) enthalten sein können. Die konkrete Zusammensetzung des Gasgemisches ist stets unterschiedlich und hängt von den Bestandteilen der verwendeten Biomasse sowie von den Fermentationsbedingungen ab, wie beispielsweise dem herrschenden Druck und der Temperatur.

Zur Messung der Menge der entstehenden Gase wird beispielsweise in der DE 102004047560 B3 eine Biogas-Messeinrichtung mit einem Gasvolumen-Messgerät beschrieben, wobei als Gasvolumen-Messgerät Verdrängungszähler, Wirkdruckgaszähler und Strömungsgaszähler genannt werden.

Verdrängungszähler sind volumetrische Messgeräte, bei denen die Volumenmessung unmittelbar durch periodisches Füllen und Entleeren einer oder mehrerer Messkammern erfolgt. Demgegenüber bestehen Wirkdruckzähler aus einer Messstrecke mit einem Wirkdruckgeber (bspw. einer Blende oder Düse), an dem sich in Folge der Querschnittsverengung die Durchflussgeschwindigkeit erhöht und sich somit eine Druckdifferenz (Wirkdruck) einstellt, die ein Maß für den Gasdurchfluss ist. Schließlich erfolgt die Volumenmessung mit einem Strömungsgaszähler mittelbar über die Messung der Drehgeschwindigkeit einer in den Gasstrom eingebrachten Turbine.

Die beschriebenen Verfahren sind jedoch nur für relativ große Volumenströme geeignet. Nachteilig an den bekannten Vorrichtungen ist ferner, dass diese sehr aufwendig installiert werden müssen und äußerst wartungsintensiv sind. Ferner sind die Messergebnisse der angewendeten Verfahren ungenau.

Es ist daher die Aufgabe der vorliegenden Erfindung ein Verfahren und eine Vorrichtung vorzuschlagen, womit ein genaues Messen von Gasmengen ermöglicht wird. Insbesondere soll sowohl der dynamische Verlauf der Gasentstehung als Gasmenge pro Zeiteinheit als auch die Summe des Gasvolumens bis zu einem beliebigen Zeitpunkt erfassbar sein. Ferner soll die Vorrichtung einfach installierbar und wartungsarm sein.

Zur Lösung dieser Aufgabe ist erfindungsgemäß ein Verfahren vorgesehen, bei dem die Anzahl $N_B$ von in einer Flüssigkeit aufsteigenden Gasblasen bestimmt wird, eine Kalibriermessung durchgeführt wird, bei der die funktionale Abhängigkeit zwischen dem Gasblasenvolumen $V_B$ und der Gasblasenfrequenz $F_B$ bestimmt wird und anschließend das Betriebsgasvolumen $V_{BG, i}$ mittels der gemessenen Anzahl $N_B$ von Gasblasen unter Berücksichtigung der funktionalen Abhängigkeit zwischen dem Gasblasenvolumen $V_B$ und der Gasblasenfrequenz $F_B$ ermittelt wird.

Das erfindungsgemäße Verfahren beruht auf der Erkenntnis, dass der Zusammenhang zwischen dem Gasblasenvolumen $V_B$ und der Gasblasenfrequenz $F_B$ mit einer quadratischen Gleichung hinreichend genau wiedergegeben werden kann. Mit den Konstanten a, b und c bzw. mit dem von der Gasblasenfrequenz $F_B$ abhängigen Volumenfaktor $K_v (F_B)$ ergibt sich das Gasblasenvolumen $V_B$ aus:

$$V_B (F_B) = a\, F_B{}^2 + b\, F_B + c = K_v (F_B) \cdot F_B$$

Im Rahmen der Kalibriermessung werden die Konstanten a, b und c oder der Volumenfaktor $K_V$ anhand von bekannten Proben ermittelt. Hiernach können die gewonnenen Daten bei weiteren Messungen des in einem Messintervall entstandenen Betriebsgasvolumens $V_{BG, i}$ herangezogen werden, wobei sich dieses aus

$$V_{BG, i} = N_B \cdot K_V (F_B)$$

ergibt.

Erfindungsgemäß wird zudem eine Vorrichtung zur Bestimmung des in Biogasanlagen während eines Messintervalls entstandenen Betriebsgas-volumen $V_{GB, i}$ vorgeschlagen, die eine Messeinheit, bestehend aus Sensoreinheit und Behälter, zum Erfassen einer Anzahl $N_B$ von Gasblasen besitzt, die pro Zeiteinheit eine Messstelle passieren, sowie einer Auswerteeinheit, mit der auf Basis des funktionalen Zusammenhangs zwischen Gasblasengröße $V_B$ und der Gasblasenfrequenz $F_B$ das Betriebsgasvolumen $V_{BG, i}$ bestimmbar ist.

Vorteilhafte Ausgestaltungen der vorliegenden Erfindung werden im Folgenden sowie in den Unteransprüchen beschrieben.

Nach einer vorteilhaften Ausgestaltung der vorliegenden Erfindung wird als Flüssigkeit, in der die zu zählenden Gasblasen aufsteigen, ein Öl verwendet, da Gasblasen aufgrund der hohen Viskosität des Öls relativ langsam aufsteigen, so dass für eine genaue Messung der Gasblasenanzahl $N_B$ ausreichend Zeit verbleibt. Die Messung der Blasenanzahl $N_B$ wird mittels eines optischen Sensors oder mittels eines kapazitiven Sensors, der insbesondere für Wasser als verwendete Flüssigkeit geeignet ist, durchgeführt.

Die alternative Verwendung eines optischen oder eine kapazitiven Sensors hängt von den erwarteten Puls-/ Pausenverhältnissen ab und ist an die entsprechenden Bedingungen stets anzupassen, um unnötige Messfehler zu vermeiden. Insbesondere bei den optischen Sensoren betragen die Pulse mehrere Millisekunden, wohingegen bei den kapazitiven Sensoren die Pulse auch kürzer als 1 Millisekunde betragen können.

Das Volumen einer bestimmten Menge an Gas ist sehr stark von den Umgebungsparametern abhängig, wie insbesondere dem herrschenden Druck P und der Temperatur T. Um eine vergleichbare Aussage über das während eines Messintervalls entstandene Betriebsgasvolumen $V_{BG, i}$ Gasmenge treffen zu können, ist es daher vorteilhaft die Temperatur des Gases sowie die herrschenden Druckverhältnisse zu messen und aus diesen Größen zusammen mit dem gemessenen Betriebsgasvolumen $V_{BG, i}$ ein Normgasvolumen $V_{NG, i}$ zu bestimmen. Hierzu wird die allgemeine Gasgleichung verwendet, die das Normgasvolumen $V_{NG, i}$ des während eines Messintervalls erzeugten Gases angibt. Es gilt:

$$V_{(NG,i)} = V_{(BG,i)} \cdot \left( \frac{(P - P_V - P_F)}{P_N} \right) \cdot \left( \frac{T_N}{T} \right)$$

Das Gesamtnormgasvolumen $V_{NG}$ ergibt sodann aus:

$$V_{NG} = \sum_{i=1}^{n} V_{(NG,i)}$$

Die in den angegebenen Formeln und im Übrigen verwendeten Größen sowie deren Einheiten sind im Folgenden aufgeführt:

| | | |
|---|---|---|
| $V_{NG}$ | Gesamtnormgasvolumen | [ l ] |
| $V_{NG, i}$ | Normgasvolumen eines Messintervalls | [ l ] |
| $V_{BG}$ | Gesamtbetriebsgasvolumen | [ l ] |
| $V_{BG, i}$ | Betriebsgasvolumen eines Messintervalls | [ l ] |
| $V_B$ | Gasblasenvolumen | [ l ] |
| $N_B$ | Anzahl der Blasen | |
| $F_B$ | Blasenfrequenz | [ 1/s ] |
| P | aktueller Luftdruck | [ hPa ] |
| $P_V$ | Wasserdampfpartialdruck | [ hPa ] |
| $P_F$ | Druck der Flüssigkeitssäule im Behälter | [ hPa ] |
| $P_N$ | Normdruck (1013,25 hPa) | [ hPa ] |
| $T_N$ | Normtemperatur (273,15 K) | [ K ] |
| T | aktuelle Temperatur | [ K ] |

Das vorliegende Verfahren berücksichtigt somit gegebenenfalls auch Temperaturschwankungen von beispielsweise 10°C zwischen Tag- und Nachttemperaturen, ferner Luftdruckschwankungen, die innerhalb eines Tages durchaus 20 - 30 mbar betragen können.

Sofern das Messergebnis für das Normgasvolumen $V_{NG, i}$ um den Volumenanteil des Wasserdampfes korrigiert werden muss, sind die folgenden Werte für den Wasserdampfpartialdruck $P_V$ einzusetzen, wobei dieser abhängig von der gemessenen Temperatur T ist.

| Temperatur [°C] | Wasserdampf-Partialdruck $P_V$ [hPa] | Temperatur [°C] | Wasserdampf-Partialdruck $P_V$ [hPa] |
|---|---|---|---|
| 15 | 17,0 | 23 | 28,1 |
| 16 | 18,1 | 24 | 29,9 |
| 17 | 19,4 | 25 | 31,7 |
| 18 | 20,6 | 30 | 42,6 |
| 19 | 22,0 | 35 | 56,4 |
| 20 | 23,4 | 40 | 73,9 |
| 21 | 24,9 | 45 | 95,9 |
| 22 | 26,4 | | |

Sollte der Wasserdampf ein natürlicher Bestandteil des Gases sein, darf die Korrektur nicht durchgeführt werden und in der allgemeinen Gasgleichung (s. o.) ist $P_V = 0$ zu setzen.

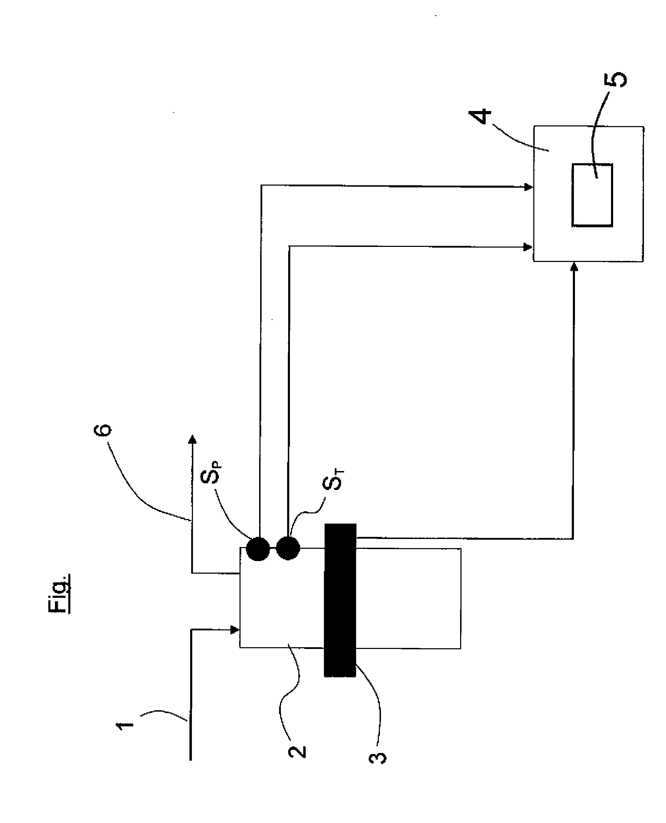

Im Folgenden wird ein konkretes Ausführungsbeispiel des erfindungsgemäßen Verfahrens und der Vorrichtung anhand der Figur erläutert, die schematisch eine Vorrichtung zeigt, die dazu dient, einzelne Gasblasen in einer Flüssigkeit zu zählen und somit das erfindungsgemäße Verfahren durchzuführen.

Das Biogas wird über eine Zuleitung 1 in einen mit einer Flüssigkeit gefüllten Behälter 2 geleitet, worin die zu zählenden Gasblasen aufsteigen. An dem Behälter 2 ist eine Sensoreinheit 3 angeordnet, die pro aufsteigende Gasblase ein Signal an eine Auswerteeinheit 4 sendet. Zusätzlich erfasst die Auswerteeinheit 4 über entsprechende Sensoren $S_P$, $S_T$ den Druck P und die Temperatur T. In der Auswerteeinheit 4 wird aus den Umgebungsparametern (P, T), der Anzahl der pro Zeiteinheit gemessenen Gasblasen sowie den zuvor experimentell ermittelten Volumenfaktoren $K_V(F_B)$ das erzeugte Gesamtnormgasvolumen $V_{NG}$ bestimmt. Das im Behälter 2 aufgestiegene Gas wird schließlich über eine Ableitung 6 zur weiteren Verwendung abgeführt.

Zur Bedienung der Auswerteeinheit 4 dient bevorzugt ein Touchscreen 5 o. ä., so dass gleichzeitig verschiedene Darstellungen der Messergebnisse sowie verschiedene Grafiken auf dem Touchscreen 5 darstellbar sind. Alternativ kann die Auswerteeinheit auch über eine serielle Schnittstelle mit einem PC verbunden werden.

Im Rahmen der vorliegenden Erfindung können mehrere Sensoreinheiten 3 gruppiert und parallel betrieben werden. Vorzugsweise werden jeweils 10 Sensoreinheiten 3 (Kanäle) zu einem Block zusammengefasst. Dabei sendet jeder Kanal bzw. jede Messeinheit (bestehend aus Sensoreinheit 3 und Behälter 2) die Zählerstände zusammen mit einer Zeitmarke an die Auswerteeinheit 4, so dass dort kanalweise und blockweise die Zählerstände abgespeichert werden. Prinzipiell ist es auch möglich für jeden Kanal unterschiedliche Umgebungsparameter (P, T), insbesondere unterschiedliche Volumenfaktoren $K_V$, vorzugeben.

In der Auswerteeinheit 4 können somit Zeitintervallmittelwerte pro Block und pro Kanal abgespeichert und auf dem Touchscreen 5 graphisch dargestellt werden. Als Zeitbasis für die Intervallmittelwerte 30 sec, 10 min, 30 min, 1 h sind vorzugsweise 0-24 h, 0-24 d oder 0-48 d wählbar. Die Daten können in der Auswerteeinheit 4 über Zeiträume der jeweiligen gewählten Versuchsdauer gespeichert werden.

Sowohl für jeden Kanal als auch für jeden Block ist vorgesehen, dass bei Bedarf die Zählimpulse aufgenommen und verwertet werden, die Zählerstände eingefroren und neue Impulse unbeachtet bleiben und der Zählerstand auf Null gesetzt werden kann.

Zusammenfassend ergibt sich mit dem erfindungsgemäßen Verfahren eine flexible Möglichkeit das entstehende Betriebsgasvolumen $V_{BG}$ genau zu messen und daraus das Gesamtnormgasvolumen $V_{NG}$ zu bestimmen.

**Patentansprüche**

1. Verfahren zur Bestimmung von Gasmengen, insbesondere des in Biogasanlagen während eines Messintervalls entstandenen Betriebsgasvolumen $V_{BG, i}$,
   **dadurch gekennzeichnet, dass**
   die Anzahl $N_B$ von in einer Flüssigkeit aufsteigenden Gasblasen bestimmt wird, eine Kalibriermessung durchgeführt wird, bei der die funktionale Abhängigkeit zwischen dem Gasblasenvolumen $V_B$ und der Gasblasenfrequenz $F_B$ bestimmt wird und anschließend das Betriebsgasvolumen $V_{BG, i}$ mittels der gemessenen Anzahl $N_B$ von Gasblasen unter Berücksichtigung der funktionalen Abhängigkeit zwischen dem Gasblasenvolumen $V_B$ und der Gasblasenfrequenz $F_B$ ermittelt wird.

2. Verfahren nach Anspruch 1, **dadurch gekennzeichnet, dass** die zu zählenden Gasblasen in einem Öl aufsteigen und dass die Messung der Blasenanzahl $N_B$ mittels eines optischen Sensors oder mittels eines kapazitiven Sensors durchgeführt wird.

3. Verfahren nach einem der Ansprüche 1 oder 2, **dadurch gekennzeichnet, dass** die Temperatur des Gases sowie die herrschenden Druckverhältnisse gemessen werden und aus diesen Größen zusammen mit dem ermittelten Betriebsgasvolumen $V_{BG, i}$ ein Gesamtnormgasvolumen $V_{NG}$ bestimmt wird.

4. Vorrichtung zum Bestimmen des in Biogasanlagen während eines Messintervalls entstandenen Betriebsgasvolumens $V_{BG, i}$, **gekennzeichnet durch** eine Messeinheit (bestehend aus Sensoreinheit (3) und Behälter (2)) zum Erfassen einer Anzahl $N_B$ von Gasblasen, die pro Zeiteinheit eine Messstelle passieren, sowie einer Auswerteeinheit (4), mit der auf Basis des funktionalen Zusammenhangs zwischen Gasblasengröße $V_B$ und der Gasblasenfrequenz $F_B$ das Betriebsgasvolumen $V_{BG, i}$ bestimmbar ist.

Fig.

EP 2 282 181 A1

Europäisches
Patentamt

European
Patent Office

Office européen
des brevets

**EUROPÄISCHER RECHERCHENBERICHT**

Nummer der Anmeldung

EP 10 16 6970

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2 594 668 A (CLIFFORD MANNAL) 29. April 1952 (1952-04-29) | 1,3,4 | INV. G01F22/00 |
| Y | * das ganze Dokument * ----- | 2 | G01F1/00 |
| Y | US 2 967 450 A (SHIELDS STANLEY E ET AL) 10. Januar 1961 (1961-01-10) | 2 | |
| A | * Spalte 1, Zeile 55 - Spalte 3, Zeile 27; Abbildungen * ----- | 1,4 | |
| A | DE 27 26 942 A1 (WIENAND HANS ING GRAD) 4. Januar 1979 (1979-01-04) * das ganze Dokument * ----- | 1,2,4 | |

RECHERCHIERTE SACHGEBIETE (IPC)

G01F

Der vorliegende Recherchenbericht wurde für alle Patentansprüche erstellt

| Recherchenort | Abschlußdatum der Recherche | Prüfer |
|---|---|---|
| München | 7. Oktober 2010 | Politsch, Erich |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

EP 2 282 181 A1

**ANHANG ZUM EUROPÄISCHEN RECHERCHENBERICHT**
**ÜBER DIE EUROPÄISCHE PATENTANMELDUNG NR.**

EP 10 16 6970

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-10-2010

| Im Recherchenbericht angeführtes Patentdokument | | Datum der Veröffentlichung | Mitglied(er) der Patentfamilie | Datum der Veröffentlichung |
|---|---|---|---|---|
| US 2594668 | A | 29-04-1952 | KEINE | |
| US 2967450 | A | 10-01-1961 | KEINE | |
| DE 2726942 | A1 | 04-01-1979 | KEINE | |

EPO FORM P0461

Für nähere Einzelheiten zu diesem Anhang : siehe Amtsblatt des Europäischen Patentamts, Nr.12/82

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004047560 B3